# FASCICULE DE BREVET EUROPEEN

(11) **EP 2 402 185 B1**
(45) Date de publication et mention de la délivrance du brevet: **22.04.2015**
(21) Numéro de dépôt: 11170356.7
(22) Date de dépôt: 17.06.2011
(51) Int. Cl.: B60H 1/03, B60H 1/00

(54) **Dispositif et procédé de chauffage d'un véhicule automobile à système de traction partiellement ou totalement électrique**
Heizvorrichtung und -verfahren eines Kraftfahrzeugs mit einem teilweise oder vollständigen elektrischen Vortriebssystem
Heating device and method for an automobile with a partially or fully electric drive system

(30) Priorité: 30.06.2010 FR 1002770
(43) Date de publication de la demande: 04.01.2012
(73) Titulaire: VALEO SYSTEMES THERMIQUES, 78320 Le Mesnil Saint-Denis (FR)
(72) Inventeur: De Pelsemaeker, Georges, 78125 POIGNY-LA-FORET (FR); Azzouz, Kamel, 75012 Paris (FR)
(74) Mandataire: Metz, Gaëlle

(56) Documents cités:
- DE-A1- 19 720 897
- FR-A1- 2 709 097
- FR-A1- 2 928 867

## Description

La présente invention concerne un dispositif et procédé de chauffage d'un véhicule automobile à système de traction partiellement ou totalement électrique. Elle est plus particulièrement destinée au chauffage de l'habitacle dudit véhicule.

Actuellement, pour les véhicules à moteur thermique, tel que moteur essence ou diesel, il est connu de refroidir le moteur à l'aide d'un circuit utilisant un fluide caloporteur qui, après avoir été échauffé en traversant le moteur peut être envoyé non seulement vers un radiateur de refroidissement dudit fluide mais aussi vers un radiateur de chauffage servant à réchauffer l'habitacle du véhicule.

Dans les véhicules électriques, on considère aujourd'hui que les systèmes d'entraînement des véhicules, notamment les machines électriques et leur dispositif de commande, dissipent trop peu de chaleur pour assurer de la sorte un chauffage satisfaisant de l'habitacle.

Le problème peut se poser de la même façon, même si c'est dans une moindre mesure, dans les véhicules à traction hybride, c'est-à-dire, combinant un moteur thermique et une machine électrique pour assurer l'entraînement du véhicule.

Il a ainsi été proposé d'utiliser des résistances électriques, alimentées à partir des batteries électriques du véhicule, pour assurer un chauffage de l'habitacle. Cependant, le bon fonctionnement de cette solution dépend de l'état de charge des batteries électriques.

Il est connu du document FR2709097 A1 un dispositif selon la préambule de la revendication 1 permettant de climatiser l'habitacle d'un véhicule automobile et de refroidir le système moteur de ce dernier, comportant un circuit caloporteur et un circuit de frigoporteur qui passent dans un accumulateur d'énergie apte à récupérer et restituer les calories libérées par le système moteur pour chauffer l'habitacle. Un tel dispositif est onéreux et complexe dans sa mise en oeuvre.

Il est connu de FR2928867A1 un dispositif de chauffage d'un véhicule automobile à système d'entrainement partiellement ou totalement électrique caractérisé en ce que ledit dispositif comprend des moyens pour chauffer un fluide caloporteur, à partir d'au moins une source de courant électrique, et une batterie thermique, ledit dispositif étant configuré pour permettre, lors de certaines phases, un chauffage dudit fluide caloporteur par lesdits moyens pour chauffer le fluide caloporteur et un stockage de chaleur depuis ledit fluide caloporteur dans ladite batterie et, lors d'autres phases, une restitution de chaleur de ladite batterie vers ledit fluide caloporteur. Un tel dispositif a pour inconvénient une inertie thermique élevée.

L'invention se propose d'améliorer cette situation et porte sur un dispositif de chauffage d'un véhicule automobile à système d'entraînement partiellement ou totalement électrique ,ledit dispositif comprenant des moyens (1) pour chauffer un fluide caloporteur, à partir d'au moins une source de courant électrique, et une batterie thermique (2), ledit dispositif étant configuré pour permettre, lors de certaines phases, un chauffage dudit fluide caloporteur par lesdits moyens (1) pour chauffer le fluide caloporteur et un stockage de chaleur depuis ledit fluide caloporteur dans ladite batterie (2) et, lors d'autres phases, une restitution de chaleur de ladite batterie (2) vers ledit fluide caloporteur,
ledit dispositif comprenant trois branches de circulation dudit fluide caloporteur parmi lesquelles :
- la première branche (4), dite de sources thermiques, comprend en série les moyens (1) pour chauffer ledit fluide caloporteur, la batterie thermique (2) et une pompe (5) de circulation du fluide caloporteur dans les branches de circulation du fluide caloporteur,
- la seconde branche (6), dite de chauffage, comprend ledit radiateur de chauffage (3) apte à être traversé par ledit fluide caloporteur et par un fluide à réchauffer, ledit radiateur (3) permettant de réaliser un échange de chaleur entre ledit fluide à réchauffer et ledit fluide caloporteur
- la troisième branche (8) est dite de charge, refermant la première branche (4) sur elle-même en court-circuitant ledit radiateur (3),
le dispositif de chauffage étant caractérisé en ce que lesdits moyens de chauffage (1) sont positionnés dans la première branche (4) en aval de ladite batterie (2), selon le sens d'écoulement du fluide caloporteur

Grâce à la batterie thermique dans laquelle de la chaleur a pu être stockée, le chauffage ne dépend donc plus seulement de l'état de charge de la source de courant utilisée.

Selon différents modes de réalisation,
- ledit dispositif comprend des moyens de contrôle de la circulation du fluide dans chacune desdites branches permettant, de façon sélective :
   - une circulation du fluide en série dans la branche de charge et dans la branche de sources thermiques,
   - une circulation en série dans la branche de sources thermiques et dans la branche de chauffage ;
- lesdits moyens de contrôle sont constitués d'une vanne trois voies, chacune desdites branches étant reliée à l'une des voies de la vanne trois voies par l'une de leur extrémité ;
- lesdits moyens pour chauffer le fluide caloporteur sont constitués d'une résistance électrique ;
- ladite batterie thermique est une batterie à chaleur latente.

L'invention sera mieux comprise à la lumière de la description suivante qui n'est donnée qu'à titre indicatif et qui n'a pas pour but de la limiter, accompagnée des dessins joints parmi lesquels :
- la figure 1 illustre de façon schématique un mode de réalisation du dispositif selon l'invention, dans un premier mode de fonctionnement,
- la figure 2 illustre de façon schématique le dispositif de la figure 1, dans un second mode de fonctionnement,
- la figure 3 illustre de façon schématique le dispositif de la figure 1, dans un troisième mode de fonctionnement,
- la figure 4 illustre de façon schématique le dispositif de la figure 1, dans un quatrième mode de fonctionnement.

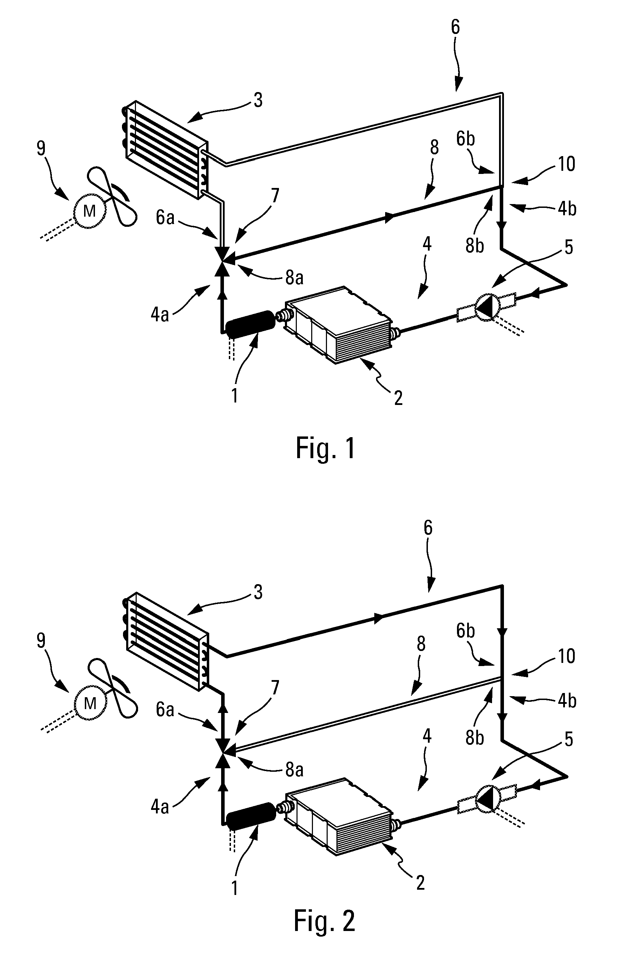

Comme illustré aux figures 1 à 4, le dispositif de chauffage conforme à l'invention comprend des moyens 1 pour chauffer un fluide caloporteur, par exemple de l'eau additionnée de glycol, à partir d'au moins une source de courant électrique, non représentée, et une batterie thermique 2.

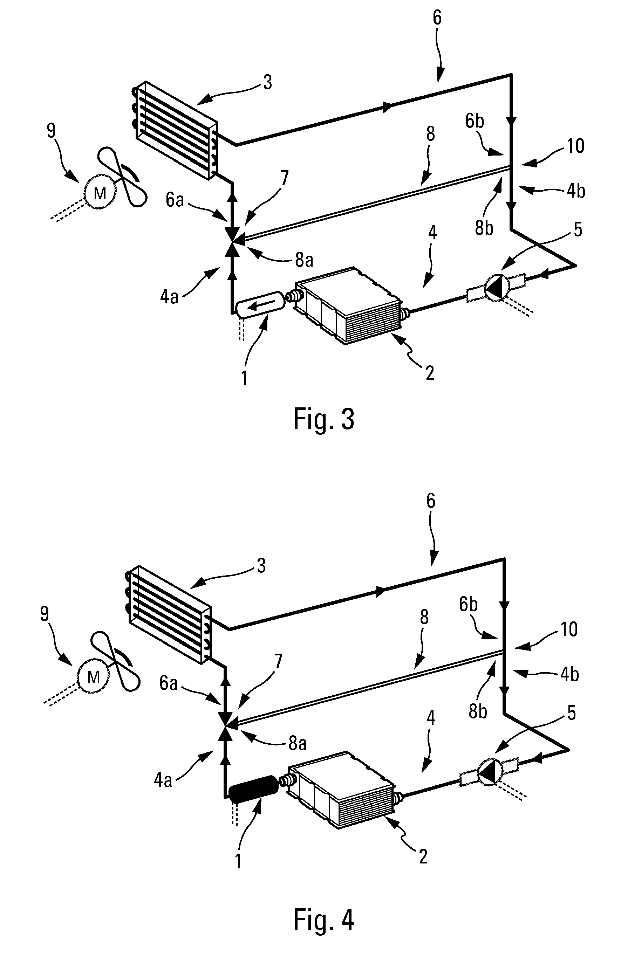

De plus, ledit dispositif est configuré pour permettre, lors de certaines phases, un chauffage dudit fluide caloporteur par lesdits moyens pour chauffer le fluide caloporteur, et un stockage de chaleur depuis ledit fluide caloporteur, dans ladite batterie, comme cela est illustré aux figures 1 et 2, et, lors d'autres phases, une restitution de chaleur de ladite batterie vers ledit fluide caloporteur, comme cela est illustré aux figures 3 et 4.

Par « moyens pour chauffer », on entend, par exemple, que la fonction principale, voir unique, desdits moyens est de chauffer le fluide caloporteur et qu'il ne s'agit pas d'organes électriques, tels que, moteur ou composants électroniques, ayant une fonction utile différente de celle de dissiper de la chaleur dans ledit fluide caloporteur. Lesdits moyens pour chauffer le fluide caloporteur sont ainsi constitués, par exemple, d'une résistance électrique, ledit dispositif étant configuré pour que ladite résistance soit traversée par ledit fluide caloporteur.

Quant à la batterie thermique, il pourra s'agir d'une batterie à chaleur latente. Une telle batterie est configurée pour pouvoir être traversé par le fluide caloporteur. Elle est en outre munie d'un matériau à changement de phase (MCP), encapsulé dans la batterie de façon à ce qu'un échange de chaleur puisse avoir lieu entre le MCP et le fluide caloporteur. Le MCP est choisi de façon à ce que, lorsque la batterie est traversée par le liquide caloporteur prévu suffisamment chaud, c'est-à-dire à une température supérieure à la température de solidification du MCP, celui-ci fond et par conséquent emmagasine de la chaleur par changement de phase solide-liquide. L'énergie latente emmagasinée pourra alors être déstockée en faisant circuler dans la batterie le liquide caloporteur, prévu à une température inférieure à la température de fusion du MCP.

Le dispositif pourra aussi comprendre un radiateur de chauffage 3, apte à être traversé par ledit fluide caloporteur et par un fluide à réchauffer, notamment un flux d'air, ledit radiateur permettant de réaliser un échange de chaleur entre ledit fluide à réchauffer et ledit fluide caloporteur, Il pourra s'agir, par exemple, d'un échangeur du type tubes - intercalaires, c'est-à-dire, comprenant un faisceau de tubes parallèles parcourus par ledit fluide caloporteur, lesdits tubes étant reliés par leur extrémité à des boîtes collectrices présentant une entrée et une sortie pour le fluide caloporteur. Des intercalaires sont prévus entre les tubes et sont traversés par le flux d'air.

Ledit dispositif pourra être placé dans un boîtier d'un système de conditionnement d'air, non-représenté, avec un ventilateur ou pulseur 9, permettant de forcer un flux d'air à travers ledit échangeur.

Selon l'exemple de réalisation illustré, ledit dispositif selon comprend trois branches de circulation dudit fluide caloporteur.

La première branche 4, dite de sources thermiques, comprend en série les moyens pour chauffer ledit fluide caloporteur 1 et la batterie thermique 2. Elle pourra aussi comprendre une pompe 5 de circulation dudit fluide caloporteur, par exemple montée en série avec les moyens pour chauffer le fluide caloporteur 1 et la batterie 2.

Comme illustré par les figures, la batterie thermique 2 est située en amont des moyens pour chauffer le fluide caloporteur 1 selon le sens donné à la circulation du fluide par la pompe 5 dans ladite première branche 4.

La seconde branche 6, dite de chauffage, comprend ledit radiateur de chauffage 3.

Ledit dispositif comprend en outre des moyens 7 de contrôle de la circulation du fluide dans chacune desdites branches permettant, de façon sélective :
- une circulation du fluide en série dans la troisième branche 8, dite de charge, et dans la branche 4 de sources thermiques,
- une circulation en série dans la branche 4 de sources thermiques et dans la branche de chauffage 6.

Il pourra s'agir, par exemple, d'une vanne trois voies, chacune desdites branches étant reliée à l'une des voies de la vanne trois voies par l'une de leur extrémité 4a, 6a, 8a. Lesdites branches 4, 6, 8 sont par ailleurs reliées entre elles au niveau d'un point commun 10 placé à l'autre de leur extrémité 4b, 6b, 8b.

Ledit dispositif est configuré pour permettre la mise en oeuvre, totale ou partielle, du procédé conforme à l'invention dont la description suit.

Selon ce dernier, comme déjà dit, lors de certaines phases, on stocke de la chaleur depuis ledit fluide caloporteur dans ladite batterie 2 en chauffant ledit fluide caloporteur par lesdits moyens 1 pour chauffer le fluide caloporteur, comme cela est illustré aux figures 1 et 2. Lors d'autres phases, on chauffe le fluide caloporteur par une restitution de chaleur de ladite batterie 2 vers ledit fluide caloporteur, comme cela est illustré aux figures 3 et 4.

Lors des phases de chauffage dudit fluide caloporteur par lesdits moyens 1 pour chauffer le fluide caloporteur, on pourra obtenir un réchauffement du flux d'air traversant le radiateur en faisant circuler le fluide caloporteur à travers lesdits moyens 1 pour chauffer ledit fluide caloporteur et à travers ledit radiateur 3, comme illustré aux figures 2 et 4.

Lors des phases de restitution de la chaleur par ladite batterie thermique 2, on pourra obtenir un réchauffement du flux d'air en faisant circuler le fluide caloporteur. à travers ladite batterie 2 et ledit radiateur 3, comme cela est illustré aux figures 3 et 4.

On dispose ainsi de trois modes pour obtenir un réchauffement de l'air traversant le radiateur 3.

Par ailleurs, selon un mode de réalisation de l'invention, on repère un mode dans lequel le véhicule est connecté à un réseau électrique domestique, dit mode d'arrêt, et un mode dans lequel le système d'entraînement du véhicule est actif, dit mode de roulage.

Et, en cas de repérage dudit mode d'arrêt, on alimente lesdits moyens 1 pour chauffer ledit fluide caloporteur à partir dudit réseau électrique domestique, comme cela est illustré aux figures 1 et 2.

Par réseau électrique domestique, on entend, par exemple, le réseau électrique basse tension d'un domicile ou d'une station de charge telle qu'un réseau électrique alternatif triphasé offrant un courant électrique de 220V à 240V, à 50 ou 60 Hz, entre phase et neutre.

A l'inverse, en mode de roulage, on alimentera lesdits moyens 1 pour chauffer ledit fluide caloporteur à partir d'une source de courant du véhicule, notamment une source de courant du système d'entrainement du véhicule.

Il pourra s'agir d'un réseau électrique haute tension du véhicule, tel qu'un réseau offrant un courant continu de 400 V, reliant la machine électrique d'entrainement du véhicule à des batteries, dite de traction. Il pourrait aussi s'agir d'un réseau basse tension du véhicule, tel qu'un réseau offrant un courant continu de 12V, servant à alimenter différents organes électriques du véhicule depuis une batterie basse tension.

D'une façon plus générale, en mode d'arrêt les différents équipements électriques du dispositif de chauffage selon l'invention, tels que la pompe 5 et/ou le ventilateur 9, pourront être alimentés par ladite source de courant domestique tandis que, en mode de roulage, ils seront alimentés par ladite source de courant du véhicule.

De façon plus détaillé, comme illustré à la figure 1, en mode d'arrêt, on pourra tout d'abord charger la batterie thermique 2 en faisant circuler le fluide en série dans la branche de charge 8 et dans la branche de sources thermiques 4, notamment par la vanne trois voies 7 dont les voies reliées aux dites branches 4, 8 sont prévues ouvertes tandis que la voie de ladite vanne 7, reliée à la branche de chauffage 6, est fermée. Et on alimente la résistance 1 par la source de courant domestique, sans alimenter le ventilateur 2. La pompe 5 est elle aussi alimentée par la source de courant domestique.

Toujours en mode d'arrêt, comme illustré à la figure 2, on pourra ensuite, si désiré, chauffer le fluide traversant le radiateur de chauffage 3 en faisant circuler le fluide en série dans la branche 4 de sources thermiques et dans la branche 6 de chauffage, notamment par la vanne trois voies 7 dont les voies reliées aux dites branches 4, 6 sont prévues ouvertes tandis que la voie de ladite vanne 7, reliée à la branche de charge 8, est fermée. Et on alimente la résistance 1 et la pompe 5 ainsi que le ventilateur 9 à partir de ladite source de courant domestique. On peut ainsi réaliser un pré chauffage du véhicule, sans décharger ni ses batteries électriques ni la batterie thermique. Cela étant, grâce au positionnement de la batterie 2 en amont de la résistance 1, on pourra aussi réaliser un pré chauffage du véhicule, même si la batterie thermique 2 n'est pas chargée.

De même, en mode de roulage, comme illustré à la figure 3, on pourra obtenir un chauffage de l'habitacle en chauffant le fluide traversant le radiateur de chauffage 3 grâce à une circulation du fluide caloporteur dans la branche de sources thermiques 4 et dans la branche de chauffage 6, notamment par la vanne trois voies 7 dont les voies reliées aux dites branches 4, 6 sont prévues ouvertes tandis que la voie de ladite vanne 7, reliée à la branche de charge 8, est fermée. Et on alimente la pompe 5 ainsi que, éventuellement, le ventilateur 9, sans alimenter la résistance 1. On minimise ainsi le courant pris sur les batteries électriques en se servant de la restitution de chaleur réalisé par la batterie thermique 2.

Toujours en mode de roulage, on pourra repérer des conditions de déchargement de la batterie thermique 2 et chauffer le fluide traversant le radiateur de chauffage 3 en faisant circuler le fluide en série dans la branche de sources thermiques 4 et dans la branche de chauffage 6, notamment par la vanne trois voies 7 dont les voies reliées aux dites branches 4, 6 sont prévues ouvertes tandis que la voie de ladite vanne 7, reliée à la branche de charge 8, est fermée. Et on alimente la pompe 5 et la résistance 1 ainsi que, éventuellement, le ventilateur 9. On peut ainsi, en particulier si la demande de chauffage se prolonge et si l'état de charge des batteries électriques du véhicules le permet, prolonger le réchauffement de l'air, même si les batteries thermiques n'ont plus ou peu de chaleur à restituer.

## Revendications

1. Dispositif de chauffage d'un véhicule automobile à système d'entraînement partiellement ou totalement électrique ,ledit dispositif comprenant des moyens (1) pour chauffer un fluide caloporteur, à partir d'au moins une source de courant électrique, et une batterie thermique (2), ledit dispositif étant configuré pour permettre, lors de certaines phases, un chauffage dudit fluide caloporteur par lesdits moyens (1) pour chauffer le fluide caloporteur et un stockage de chaleur depuis ledit fluide caloporteur dans ladite batterie (2) et, lors d'autres phases, une restitution de chaleur de ladite batterie (2) vers ledit fluide caloporteur,
ledit dispositif comprenant trois branches de circulation dudit fluide caloporteur parmi lesquelles :
- la première branche (4), dite de sources thermiques, comprend en série les moyens (1) pour chauffer ledit fluide caloporteur, la batterie thermique (2) et une pompe (5) de circulation du fluide caloporteur dans les branches de circulation du fluide caloporteur,
- la seconde branche (6), dite de chauffage, comprend ledit radiateur de chauffage (3) apte à être traversé par ledit fluide caloporteur et par un fluide à réchauffer, ledit radiateur (3) permettant de réaliser un échange de chaleur entre ledit fluide à réchauffer et ledit fluide caloporteur
- la troisième branche (8) est dite de charge, refermant la première branche (4) sur elle-même en court-circuitant ledit radiateur (3),
le dispositif de chauffage étant **caractérisé en ce que** lesdits moyens de chauffage (1) sont positionnés dans la première branche (4) en aval de ladite batterie (2), selon le sens d'écoulement du fluide caloporteur.

2. Dispositif selon la revendication 1 comprenant des moyens (7) de contrôle de la circulation du fluide dans chacune desdites branches (4, 6, 8) permettant, de façon sélective :
- une circulation du fluide en série dans la branche de charge (8) et dans la branche de sources thermiques (4),
- une circulation en série dans la branche de sources thermiques (4) et dans la branche de chauffage (6).

3. Dispositif selon la revendication 2 dans lequel lesdits moyens (7) de contrôle sont constitués d'une vanne trois voies, chacune desdites branches (4, 6, 8) étant reliée à l'une des voies de la vanne trois voies par l'une de leur extrémité.

4. Dispositif selon l'une quelconque des revendications précédentes dans lequel lesdits moyens (1) pour chauffer le fluide caloporteur sont constitués d'une résistance électrique et/ou ladite batterie thermique (2) est une batterie à chaleur latente.

## Patentansprüche

1. Heizungsvorrichtung eines Kraftfahrzeugs mit einem teilweise oder vollständig elektrischen Antriebssystem, wobei die Vorrichtung Mittel (1) zum Erwärmen eines Wärmeträgerfluids von mindestens einer elektrischen Stromquelle und einer thermischen Batterie (2) aus aufweist, wobei die Vorrichtung konfiguriert ist, um während bestimmter Phasen ein Erwärmen des Wärmeträgerfluids durch die Mittel (1) zum Erwärmen des Wärmeträgerfluids und eine Lagerung von Wärme von dem Wärmeträgerfluid aus in der Batterie (2) und während anderer Phasen eine Abgabe von Wärme der Batterie (2) an das Wärmeträgerfluid zu ermöglichen,
wobei die Vorrichtung drei Zirkulationsstränge des Wärmeträgerfluids aufweist, wobei:
- der erste Strang (4) der Wärmequellen in Serie die Mittel (1) zum Erwärmen des Wärmeträgerfluids, die thermische Batterie (2) und eine Pumpe (5) zum Zirkulieren des Wärmeträgerfluids in den Zirkulationssträngen des Wärmeträgerfluids aufweist,
- der zweite Strang (6) zum Heizen den Wärmetauscher (3) aufweist, der geeignet ist, von dem Wärmeträgerfluid und von einem wieder zu erwärmenden Fluid durchströmt zu werden, wobei der Wärmetauscher (3) ermöglicht, einen Wärmeaustausch zwischen dem wieder zu erwärmenden Fluid und dem Wärmeträgerfluid herbeizuführen,
- der dritte Strang (8) zum Laden ist, indem der erste Strang (4) in sich selbst geschlossen wird, indem der Wärmetauscher (3) umgangen wird,
wobei die Heizungsvorrichtung **dadurch gekennzeichnet ist, dass** die Mittel (1) zum Erwärmen in dem ersten Strang (4) hinter der Batterie (2) nachgelagert in der Strömungsrichtung des Wärmeträgerfluids angeordnet wird.

2. Vorrichtung nach Anspruch 1, umfassend Mittel (7) zum Kontrollieren der Zirkulation des Fluids in jedem der Stränge (4, 6, 8), die selektiv Folgendes erlauben:
- eine Zirkulation des Fluids in Serie in dem Ladestrang (8) und in dem Strang der Wärmequellen (4),
- eine Zirkulation des Fluids in Serie in dem Strang der Wärmequellen (4) und in dem Strang zum Heizen (6).

3. Vorrichtung nach Anspruch 2, wobei die Mittel (7) zum Kontrollieren aus einem Dreiwegeventil gebildet sind, wobei jeder der Stränge (4, 6, 8) mit einem der Wege des Dreiwegeventils durch eines seiner Enden verbunden ist.

4. Vorrichtung nach einem der vorhergehenden Ansprüche, wobei die Mittel (1) zum Erwärmen des Wärmeträgerfluids aus einem elektrischen Bauelement gebildet sind und/oder die thermische Batterie (2) eine Batterie mit latenter Wärme ist.

## Claims

1. Device for heating a motor vehicle with a partially or totally electrical drive system, said device comprising means (1) for heating a heat transfer fluid, from at least one source of electrical current, and a thermal battery (2), said device being configured to allow, in certain phases, for heating of said heat transfer fluid by said means (1) for heating the heat transfer fluid and a storage of heat from said heat transfer fluid in said battery (2) and, in other phases, a restoration of heat from said battery (2) to said heat transfer fluid,
said device comprising three circulation branches for said heat transfer fluid in which:
- the first branch (4), called heat sources branch, comprises, in series, the means (1) for heating said heat transfer fluid, the thermal battery (2) and a pump (5) for circulating the heat transfer fluid in the heat transfer fluid circulation branches,
- the second branch (6), called heating branch, comprises said heating radiator (3) suitable for being passed through by said heat transfer fluid and by a fluid to be heated, said radiator (3) making it possible to produce a heat exchange between said fluid to be heated and said heat transfer fluid
- the third branch (8) is called load branch, closing the first branch (4) on itself by short-circuiting said radiator (3),
the heating device being **characterized in that** said heating means (1) are positioned in the first branch (4) downstream of said battery (2), in the direction of flow of the heat transfer fluid.

2. Device according to Claim 1, comprising means (7) for controlling the circulation of the fluid in each of said branches (4, 6, 8), selectively allowing:
- a circulation of the fluid in series in the load branch (8) and in the heat sources branch (4),
- a circulation in series in the heat sources branch (4) and in the heating branch (6).

3. Device according to Claim 2, in which said control means (7) consist of a three-way valve, each of said branches (4, 6, 8) being linked to one of the ways of the three-way valve by one of their ends.

4. Device according to any one of the preceding claims, in which said means (1) for heating the heat transfer fluid consist of an electrical resistance and/or said thermal battery (2) is a latent heat battery.
